# EUROPÄISCHE PATENTANMELDUNG

(11) **EP 4 382 209 A1**
(43) Veröffentlichungstag der Anmeldung: **12.06.2024**
(21) Anmeldenummer: 23213139.1
(22) Anmeldetag: 29.11.2023
(51) Int. Cl.: B02C 18/30

(54) **MASCHINE ZUR FLEISCHVERARBEITUNG**

(30) Priorität: 05.12.2022 DE 102022132161
(71) Anmelder: MADO GmbH, 72175 Dornhan (DE)
(72) Erfinder: Beilharz, David, 72250 Freudenstadt-Dietersweiler (DE); Sauter, Valentin, 78736 Epfendorf (DE)
(74) Vertreter: Westphal, Mussgnug & Partner Patentanwälte mbB

(57) **Zusammenfassung**

Bereitgestellt wird eine Maschine (1) zur Verarbeitung von Fleisch mit einem Motor, (120) mit einer durch den Motor (120) angetriebenen Welle (130) und mit einer Aufnahme (150) für ein zu verarbeitendes Fleischstück oder einen zu verarbeitenden Fleischblock, wobei die Aufnahme (150) zu der angetriebenen Welle (130) hin geöffnet ist, so dass ein Teil des in der Aufnahme (150) aufgenommenen Fleischstücks oder Fleischblocks durch eine zumindest abschnittsweise auf der angetriebenen Welle (130) angeordnete Schnecke (131) zu einem Schneidsatz (200) gefördert wird, wobei der Schneidsatz (200) mindestens eine im Wesentlichen senkrecht zur Drehachse der angetriebenen Welle (130) angeordnete Lochscheibe(220, 221) und mindestens ein an einem Messerzapfen (230) angeordnetes und mit diesem in einer im Wesentlichen parallel zur mindestens einen Lochscheibe (220, 221) liegenden Ebene drehbares Messer (238, 239) aufweist, wobei der Messerzapfen (230) derart an der angetriebenen Welle (130) angeordnet ist, dass eine Drehung der angetriebenen Welle (130) auf den Messerzapfen (230) übertragen wird, so dass sich das mindestens eine Messer (238, 239) dreht, bei der der Messerzapfen (230) an der angetriebenen Welle (130) pendelnd gelagert ist.

## Beschreibung

Die Erfindung betrifft eine Maschine zur Fleischverarbeitung mit den Merkmalen des Oberbegriffs des Patentanspruchs 1. Sie ist besonders gut für einen Industriewolf oder Gefrierfleischwolf geeignet.

Fleisch wird heutzutage in vielen Fällen in großen Mengen maschinell verarbeitet, insbesondere zerkleinert. Dazu werden Fleischstücke oder Fleischblöcke, die insbesondere auch durch das Zusammenfrieren mehrerer Teilstücke erzeugt werden können, in eine beispielsweise als Trichter ausgeführte Aufnahme einer Maschine eingeführt, die zu einer von einem Motor angetriebenen Welle hin offen ist, so dass das Gewicht des in die Aufnahme eingeführten Fleischstücks oder Fleischblocks diesen an die Welle und insbesondere an mindestens eine im Bereich dieser Aufnahme zumindest abschnittsweise spiralförmig um die Welle herum verlaufende und mit der Welle verbundene Schneide drückt.

Die durch den Motor hervorgerufene Drehung der Welle führt dazu, dass ein Streifen von dem Fleischstück oder Fleischblock abgetrennt und über eine ebenfalls fest an der Welle angeordnete Schnecke, die auch in die Schneide übergehen oder abschnittsweise die Schneide aufweisen kann, der weiteren Verarbeitung in einem Schneidsatz zugeführt wird.

Dieser Schneidsatz weist neben einer oder mehreren feststehenden Lochscheiben typischerweise mindestens ein rotierendes Messer auf, das mit einem drehbar gelagerten Messerzapfen verbunden ist. Zum Motor des Messerzapfens ist dieser drehfest mit der Welle verbunden. Dementsprechend wird der vordere Abschnitt des Streifens, gegebenenfalls nach Bearbeitung durch einen Vorschneider, gegen eine Lochscheibe gepresst und durch das rotierende Messer, das in eine parallel zur Lochscheibe liegenden Ebene rotiert, abgetrennt, so dass das Fleisch zerkleinert wird. Insbesondere kann dieser Prozess in einem Schneidsatz mehrfach wiederholt werden, wobei die Löcher der Lochscheibe sukzessive in Verarbeitungsrichtung, das heißt in Richtung auf den Auswurf für das zerkleinerte Fleisch bzw. einen daran angeordneten oder anordnenbaren Auffangbehälter hin, typischerweise kleiner werden, so dass das Fleisch in immer feinere Stücke zerteilt wird.

Allerdings leiden bekannte Maschinen zur Verarbeitung von Fleisch dieser Bauart, wie beispielsweise die bisherige Version des Industriewolfs vom Typ Mado Gigant MEW 734 der Anmelderin unter dem Problem, dass die in der Aufnahme befindlichen Fleischstücke oder Fleischblöcke durch die Scherkräfte beim Zerkleinern auf Grund der Schneider und Komprimierung an der Übergangsstelle zum Wellengehäuse erhebliche Kräfte auf die Welle wirken, die sie so weit durchbiegen, dass die drehfeste Verbindung zum Messerzapfen eines Scheidsatzes kaum noch herstellbar ist und falls sie noch herstellbar ist die Rotationsebenen der Messer leicht verkippen kann. Das ist fatal, weil diese Ebenen typischerweise in geringem Abstand und parallel zu den Lochscheiben verlaufen müssen und eine Verkippung diese Ausrichtung stört und in der Folge zu erhöhtem Verschleiß im Schneidsatz führt oder den Schneidsatz zerstört.

Die Aufgabe der Erfindung besteht daher darin, eine Maschine zur Verarbeitung von Fleisch mit einer verbesserten Kopplung zwischen Welle und Schneidsatz bereitzustellen, bei der insbesondere den negativen Effekt, der aus der Durchbiegung der Welle resultiert, vermieden wird.

Diese Aufgabe wird gelöst durch eine Maschine zur Verarbeitung von Fleisch mit den Merkmalen des Patentanspruchs 1. Vorteilhafte Weiterbildungen der Erfindung sind Gegenstand der abhängigen Ansprüche.

Die erfindungsgemäße Maschine zur Verarbeitung von Fleisch hat einen Motor, eine durch den Motor angetriebenen Welle und eine Aufnahme für ein zu verarbeitendes Fleischstück oder einen zu verarbeitenden Fleischblock. Dabei ist die Aufnahme zu der angetriebenen Welle hin geöffnet, so dass ein Teil des in der Aufnahme aufgenommenen Fleischstücks oder Fleischblocks durch eine zumindest abschnittsweise auf der angetriebenen Welle angeordnete Schnecke zu einem Schneidsatz gefördert wird. Dieser Schneidsatz weist mindestens eine im Wesentlichen senkrecht zur Drehachse der angetriebenen Welle angeordnete Lochscheibe und mindestens ein an einem Messerzapfen angeordnetes und mit diesem in einer im Wesentlichen parallel zur mindestens einen Lochscheibe liegenden Ebene drehbares Messer auf, und der Messerzapfen ist derart an der angetriebenen Welle angeordnet, dass eine Drehung der angetriebenen Welle auf den Messerzapfen übertragen wird, so dass sich das Messer dreht

Erfindungsgemäß ist der Messerzapfen an der angetriebenen Welle pendelnd gelagert. Diese pendelnde Lagerung erlaubt es, den Lauf des Messerzapfens weitgehend von den durch die Belastung der angetriebenen Welle durch Scher- und Biegungskräfte hervorgerufenen Biegemomenten zu entkoppeln, während die Drehbewegung der angetriebenen Welle weiterhin problemlos auf den Messerzapfen übertragen wird.

Besonders einfach kann eine solche pendelnde Lagerung dadurch erzielt werden, dass die angetriebene Welle einen Zapfen mit zumindest abschnittsweise balligen Seitenflächen aufweist, der sich typischerweise ausgehend von einem dem Messerzapfen zugewandten Oberflächenabschnitt längs der Drehachse der angetriebenen Welle erstreckt und in eine Aufnahme im Messerzapfen so eingreift, dass die Drehung der angetriebenen Welle auf den Messerzapfen übertragen wird.

Die zumindest abschnittsweise balligen Seitenflächen können beispielsweise durch Abschnitte einer Kugeloberfläche einer Kugel gebildet werden. Beispielsweise kann der Zapfen im Wesentlichen vierkantförmig und auf der Drehachse der angetriebenen Welle zentriert sein, der Mittelpunkt der Kugel kann dann innerhalb des vierkantförmigen Zapfens liegen. Insbesondere kann der Mittelpunkt auf der Mittelachse des vierkantförmigen Zapfens liegen, wobei der Radius der Kugel größer als der Abstand der Seitenflächen des vierkantförmigen Zapfens von der Mittelachse des vierkantförmigen Zapfens ist. Dieser vierkantförmige Zapfen kann dann zur Herstellung der drehfesten Verbindung in eine in der ihm zugewandte, im Wesentlichen vierkantförmige Aufnahme eingeführt sein. Es sind aber auch andere geometrische Konfigurationen denkbar, beispielsweise sechskantförmige, achtkantförmige oder sonstige Polygonverbindungen.

Besonders bevorzugt ist es, wenn eine solche Aufnahme des Messerzapfens an seiner der angetriebenen Welle zugewandten Stirnseite Wände hat, die konkave Abschnitte zur Lagerung der balligen Abschnitte der zumindest abschnittsweise balligen Seitenflächen aufweisen. Bevorzugt ist die Krümmung der konkave Abschnitte an die Krümmung der balligen Oberflächenabschnitte angepasst. Dies verbessert die Präzision der pendelnden Lagerung.

Eine alternative oder zusätzliche Verbesserung der pendelnden Lagerung wird dadurch bewirkt, dass der Zapfen eine zumindest abschnittsweise ballige Stirnfläche aufweist. Ist dies der Fall, optimiert es die pendelnde Lagerung noch weiter, wenn auch der Boden der Aufnahme einen konkaven Abschnitt zur Lagerung des balligen Abschnitts der zumindest abschnittsweise balligen Stirnfläche aufweist, ganz besonders dann, wenn auch dessen Krümmung bevorzugt an die Krümmung des entsprechenden balligen Oberflächenabschnitts angepasst ist.

Eine weitere Verbesserung der Lagerung kann dadurch erreicht werden, dass der Zapfen mit zumindest abschnittsweise balligen Seitenflächen am Boden einer Vertiefung angeordnet ist, die sich ausgehend von der dem Messerzapfen zugewandten Stirnseite der angetriebenen Welle in die angetriebene Welle hinein erstreckt, dass die Aufnahme in einem Kopf des Messerzapfens angeordnet ist und dass der Kopf des Messerzapfens mit einem Spiel in der Vertiefung gelagert ist, um den nötigen Freiraum für eine pendelnde Bewegung zu schaffen.

Die Auswirkungen der belastungsbedingten Verformungen der angetriebenen Welle auf das Laufverhalten des Messerzapfens können weiter dadurch reduziert werden, dass der Messerzapfen vor und/oder hinter mindestens einer Lochscheibe gelagert ist. In Fällen, in denen mehrere Lochscheiben vorhanden sind, ist diese Bedingung offensichtlich auch erfüllt, wenn es nur eine Lochscheibe gibt, für die dies zutrifft. Besonders vorteilhaft ist es aber, den Messerzapfen im Vorschneider der in Verarbeitungsrichtung des Fleisches gesehen vor allen sonstigen Lochscheiben angeordnet ist, und in einem Stützkreuz, das in Verarbeitungsrichtung des Fleisches hinter allen vorhandenen Lochscheiben angeordnet ist, zu lagern.

Besonders bewährt hat sich die Realisierung dieser Lagerung mit Rollenlagern.

Zusätzlich kann durch Dichtelemente, beispielsweise aus Gummi, der Bereich der Pendelbewegung noch abgedichtet werden.

Um zu verhindern, dass bei den entstehenden Pendelbewegungen zu hohe Verschleißerscheinungen zwischen den beteiligten Komponenten auftreten, werden diese Komponenten oder deren betreffenden Oberflächen gehärtet bzw. vergütet.

Die Erfindung wird nachfolgend anhand von Figuren, die ein Ausführungsbeispiel zeigen, näher erläutert. Es zeigt:
- Fig. 1:: Einen Querschnitt durch eine Maschine zur Verarbeitung von Fleisch,
- Fig. 2:: eine vergrößerte Querschnittsdarstellung von Welle und Schneidsatz der Maschine zur Verarbeitung von Fleisch aus Figur 1,
- Fig. 3:: eine Einzeldarstellung von Welle und Messerzapfen der Maschine zur Verarbeitung von Fleisch aus Figur 1,
- Fig. 4a:: eine Ansicht des Verbindungsabschnitts der Welle zum Messerzapfen, gesehen von schräg vorne,
- Fig. 4b:: eine Ansicht des Verbindungsabschnitts des Messerzapfens zur Welle, gesehen von schräg vorne,
- Fig. 5:: eine Ausschnittsvergrößerung eines Teils des Verbindungsabschnitts zwischen Welle und Messerzapfen im Querschnitt, und
- Fig. 6:: eine Außenansicht der Maschine zur Verarbeitung von Fleisch aus Figur 1.

Für gleiche Ausführungsformen werden nachfolgend gleiche Bezugszeichen verwendet, sofern nichts anderes erwähnt ist. Zur Verbesserung der Übersichtlichkeit sind nicht immer alle Bezugszeichen in allen Figuren angetragen.

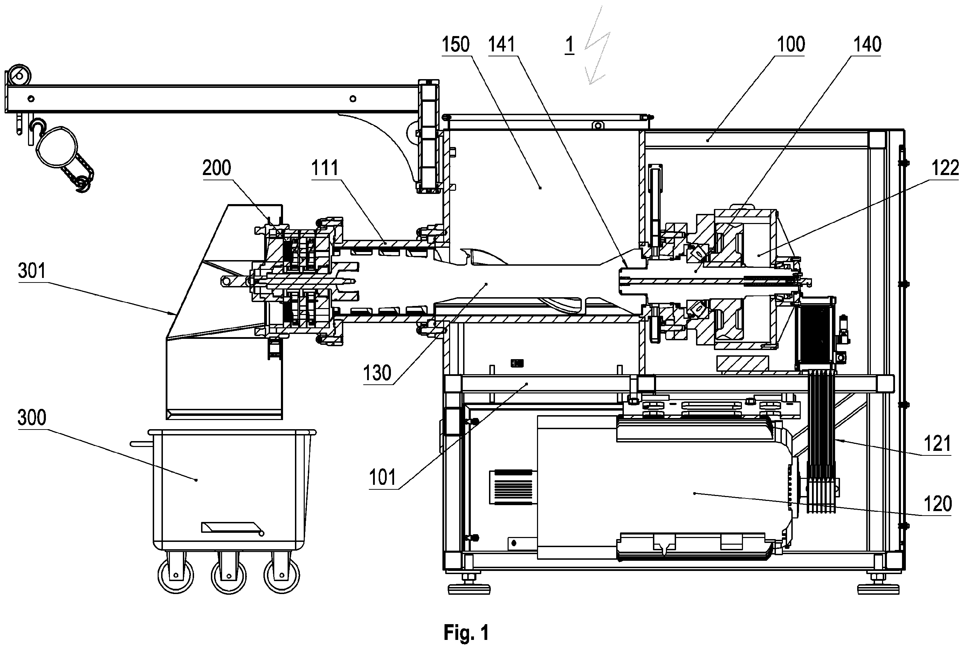

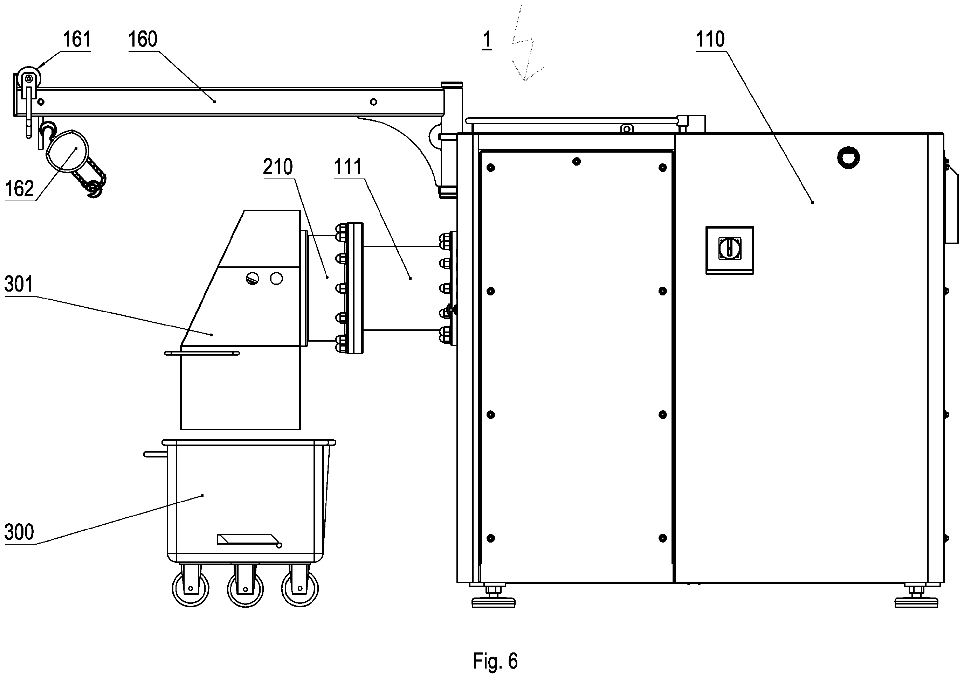

Die in Figur 6 dargestellte Maschine 1 zur Verarbeitung von Fleisch hat, wie man am besten in der Querschnittsdarstellung der Figur 1 erkennt, einen Maschinenrahmen 100, der einen Innenraum definiert. Der Innenraum ist durch ein vom Maschinenrahmen 100 getragenes Gehäuse 110, das am besten in Figur 6 zu erkennen ist, von der Umgebung getrennt.

Im Innenraum des Maschinenrahmens 100 befindet sich ein Motor 120, typischerweise ein Elektromotor, der in diesem Ausführungsbeispiel im unteren Bereich des Maschinenrahmens 100 bodennah angeordnet ist. Der Motor 120 dient dazu, eine Welle 130, die weiter unten noch genauer beschrieben wird, in Rotation zu versetzen. Dazu ist die Welle 130 drehfest mit einer Wellenaufnahme 140 verbunden, die durch den Motor 120 in diesem Ausführungsbeispiel über einen Riemenantrieb 121 und ein Getriebe 122 in Rotation um eine Drehachse, die idealisiert mit einer Mittelachse der Welle 130 zusammenfällt, versetzt wird und somit eine angetriebene Welle 130 ist. Die drehfeste Verbindung zwischen der angetriebenen Welle 130 und der Wellenaufnahme 140 wird in diesem Beispiel durch einen Formschluss zwischen einem Fortsatz 141 der Wellenaufnahme, der in eine Ausnehmung 139 der angetriebenen Welle 130 eingreift, hergestellt.

Die Wellenaufnahme 140 weist darüber hinaus einen hydraulisch betriebenen Stößel 141 auf, der die drehfeste Verbindung zwischen Welle 130 und Wellenaufnahme 140 durch eine axiale Verschiebung des Stößels 141 in Richtung parallel zur Drehachse auf das von der Wellenaufnahme 140 abgewandten Endes der Welle 130 hin lösen kann und das Ausbauen der Welle, beispielsweise zur Reinigung nach einem Verarbeitungsprozess, erleichtert. Die Wellenaufnahme 140 und die darin aufgenommene Welle 130 sind auf einem oberhalb des Motors 120 angeordneten Zwischenboden 101 des Maschinenrahmens 100 abgestützt.

Ebenfalls zur Unterstützung beim Ein- und Ausbau der Welle 130, der insbesondere aus hygienischen Gründen häufig erfolgt, dient der stirnseitig und bevorzugt schwenkbar im oberen Bereich des Maschinenrahmens 100 angeordnete Kranausleger 160 mit einer mit einem Läufer 161 entlang des Kranauslegers 160 verschiebbaren Winde 162.

Ausgehend von der Wellenaufnahme 140 erstreckt sich die Welle 130 durch eine Aufnahme 150, die als nach oben offener Trichter ausgeführt ist, hindurch in ein rohrförmiges Wellengehäuse 111, das sich stirnseitig an das Gehäuse 110 anschließt, hinein. An dem rohrförmigen Wellengehäuse 111 an dessen vom Gehäuse 110 weg zeigenden Ende einen Schneidsatz 200, der weiter unten noch genauer beschrieben wird, mit seinem Schneidsatzgehäuse 210 befestigt. Das vom rohrförmigen Wellengehäuse 111 weg zeigende Ende des Schneidsatzgehäuses 210 trägt einen Auffangbehälter 300 mit Schutzhaube 301.

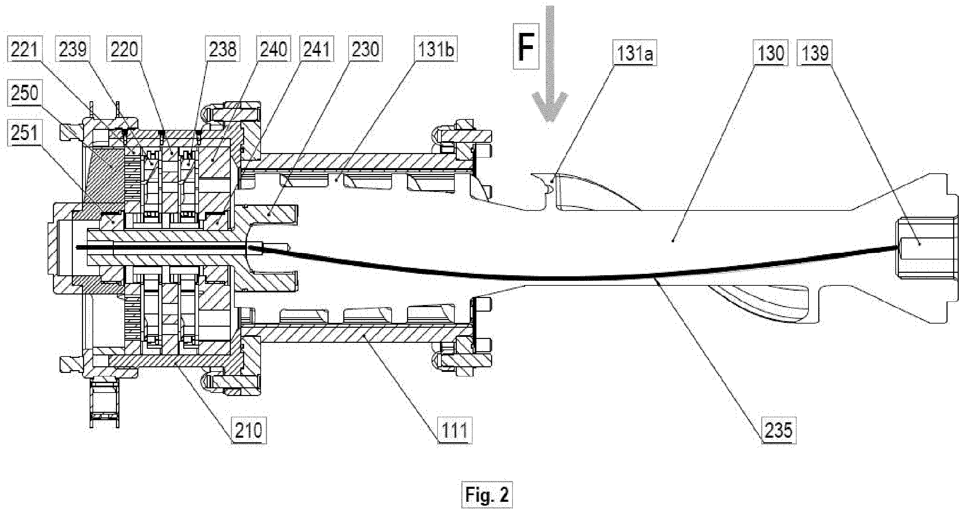

Dementsprechend kann ein zu verarbeitendes Fleischstück oder ein zu verarbeitender Fleischblock, der beispielsweise aus zusammengefrorenen Fleischstücken bestehen kann, von oben in die als Trichter ausgestaltete Aufnahme 150 eingeführt werden, beispielsweise mittels eines nicht dargestellten Förderbandes, von dessen Ende er in die Aufnahme 150 hineinfällt. Da die Aufnahme 150 zur angetriebenen Welle 130 hin offen ist, gerät das zu verarbeitendes Fleischstück oder ein zu verarbeitender Fleischblock in Kontakt mit der angetriebenen Welle 130 und soll von dieser mit Hilfe einer an der angetriebenen Welle 130 angeordneten Schnecke 131 an den nach und nach dem Schneidsatz 200 zur zerkleinernden Verarbeitung zugeführt werden. Wie dies im Einzelnen geschieht, lässt sich anhand der Querschnittsdarstellung der Figur 2 besonders gut erkennen.

Die Schnecke 131 weist in diesem Ausführungsbeispiel zwei Abschnitte 131a und 131b auf, in denen sie unterschiedlich gestaltet ist. Der Abschnitt 131a der Schnecke 131, der in der Aufnahmen 150 liegt, weist eine relativ hohe Steigung auf und umrundet innerhalb der Aufnahme die angetriebene Welle 130 einmal und ist mit einer Schneide versehen, so dass Fleisch durch den Abschnitt 131a der Schnecke 131 von einem in der Aufnahme 150 befindlichen Fleischblock abgetrennt werden kann. Der Abschnitt 131b der Schnecke, der im rohrförmigen Wellengehäuse 111 angeordnet ist, verläuft mit flacherer Steigung, windet sich mehrfach um die angetriebene Welle 130 herum und lässt lediglich noch einen geringen Spalt zur Innenseite des rohrförmigen Wellengehäuses 110, so dass die vom ersten Abschnitt 131a abgetrennten Fleischstücke weiter in Richtung zum Schneidsatz 200 hin gedrückt werden, der von vorne nach hinten passiert wird. Bei der Beschreibung des Schneidsatzes 200 wird also die der Aufnahme 150 zugewandte Seite als Vorderseite bezeichnet.

Der Schneidsatz 200 weist, wie bereits erwähnt, ein Schneidsatzgehäuse 210 auf, das im Wesentlichen zylinderrohrförmig ausgebildet ist. Im Inneren des Schneidsatzgehäuses sind zwei Lochscheiben 220, 221, deren Durchmesser jeweils an den Innendurchmesser des Schneidsatzgehäuses 210 angepasst sind, im Wesentlichen senkrecht zur Drehachse der angetriebenen Welle 130 angeordnet. Das Zentrum der Lochscheiben 220, 221 wird dabei von einem vor der vorderen Lochscheibe 220 im Vorschneider 240 und hinter der hinteren Lochscheibe 221 im Stützkreuz 250 durch Lager 241, 251 drehbar gelagerten Messerzapfen 230 durchsetzt, der zwei Messer 238, 239 trägt, so dass die Messer 238, 239 bei der Rotation des Messerzapfens jeweils vor der Lochscheibe 220 bzw. 221 kreisen und das Fleisch durch Abtrennen der zu diesem Zeitpunkt in Löcher der Lochscheiben 220 bzw. 221 hineingepressten Fleischabschnitte weiter zerkleinern. Da die Schnecke 131 weiter Fleischabschnitte in das Innere des Schneidsatzes 200 nachführt, werden die Fleischabschnitte durch die Löcher der Lochscheiben 220, 221 hindurchgedrückt und landen schließlich zerkleinert im Auffangbehälter 300.

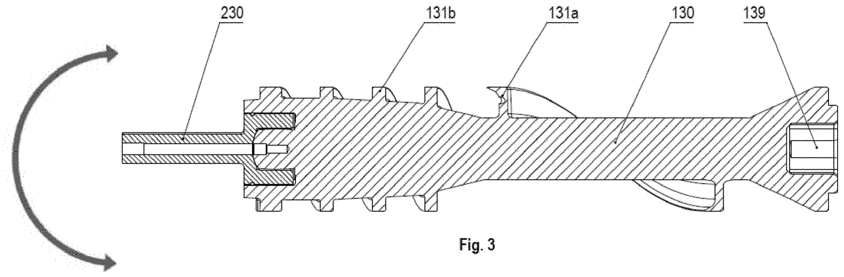

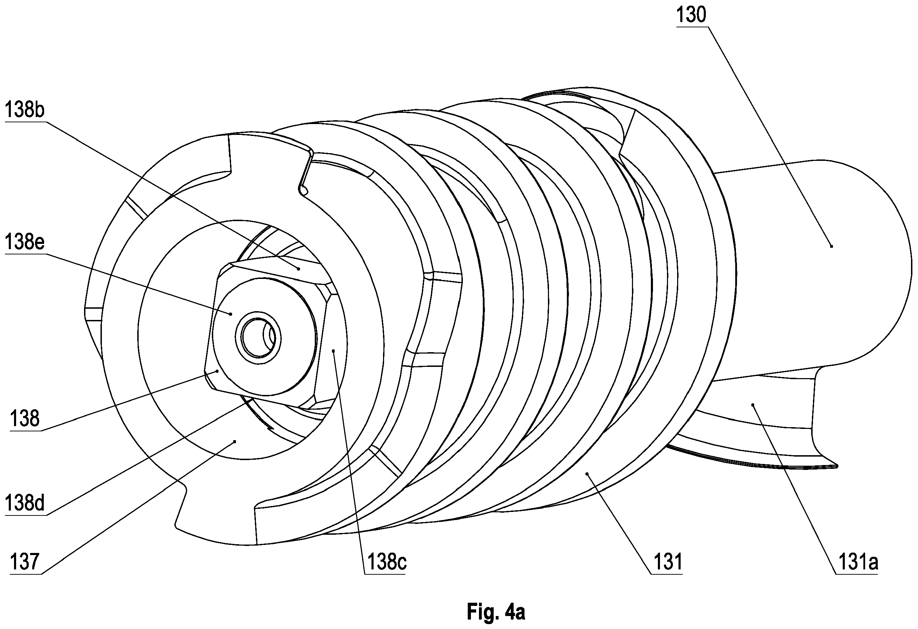

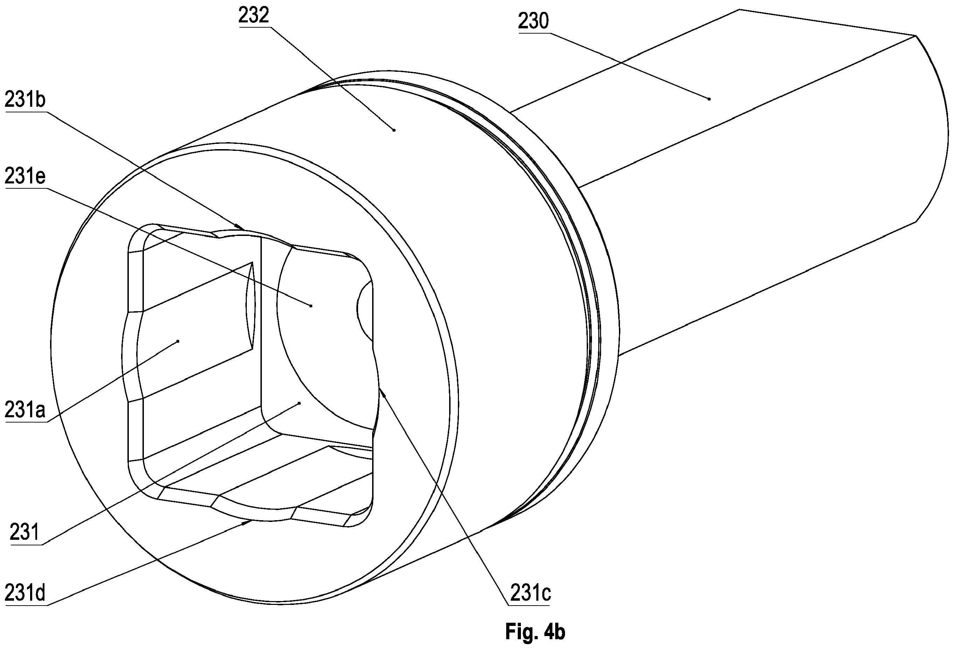

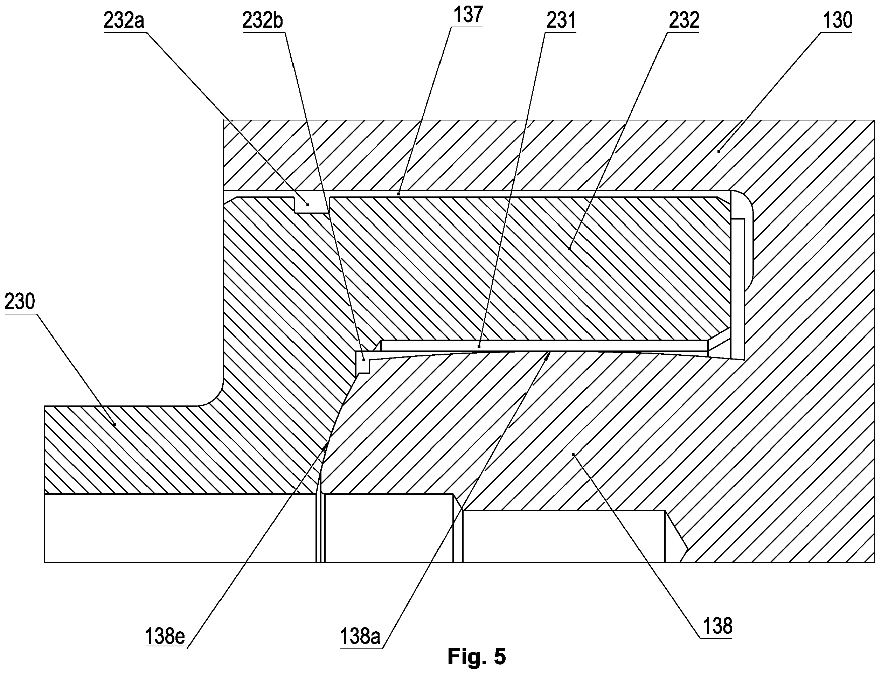

In Figur 2 ist zur Illustration des von der Erfindung gelösten Problems die auf die angetriebene Welle 130 wirkende Kraft F und -zur Veranschaulichung übertrieben- eine durch das Wirken der Kraft F verformte Mittellinie 235 der angetriebenen Welle 130 eingezeichnet, die bei einer passgenauen drehfesten Verbindung des Messerzapfens 230 mit der angetriebene Welle 130 auf den Messerzapfen 230 übertragen und damit den Schneidsatz 200 belasten würde. Dies wird durch die durch den Pfeil in Figur 3 veranschaulichte pendelnde Lagerung des Messerzapfens 130 in der angetriebenen Welle 130 verhindert, die insbesondere auf die in den Figuren 4a,4b und 5 dargestellte Weise realisiert werden kann.

Wie die in Figur 4a dargestellte Ansicht des Verbindungsabschnitts der Welle 130 zum Messerzapfen 230 zeigt, weist die angetriebene Welle 130 einen im Wesentlichen vierkantförmigen, auf der Drehachse der angetriebenen Welle 130 zentrierten Zapfen 138 mit balligen Seitenflächenabschnitten 138a,138b,138c, 138d auf den Seitenflächen des im Wesentlichen vierkantförmigen Zapfens 138 auf. Darüber hinaus hat der im Wesentlichen vierkantförmige, auf der Drehachse der angetriebenen Welle 130 zentrierte Zapfen 138 einen balligen Stirnflächenabschnitt 138e.

Dabei ist der im Wesentlichen vierkantförmige, auf der Drehachse der angetriebenen Welle 130 zentrierte Zapfen 138 mit abschnittsweise balligen Seitenflächen am Boden einer Vertiefung 137 angeordnet, die sich ausgehend von der dem Messerzapfen 230 zugewandten Stirnseite der angetriebenen Welle 130 in die angetriebene Welle 130 hinein erstreckt.

In der in Figur 4b dargestellten Ansicht des Verbindungsabschnitts des Messerzapfens 230 zur Welle 130 erkennt man, dass der Messerzapfen 230 an seiner der angetriebenen Welle zugewandten Stirnseite eine Aufnahme 231 für den im Wesentlichen vierkantförmigen, auf der Drehachse der angetriebenen Welle 130 zentrierten Zapfen 138 mit balligen Seitenflächenabschnitten 138a, 138b, 138c, 138d aufweist, wobei die Wände der Aufnahme konkave Abschnitte 231a, 231b, 231c, 231d zur Lagerung der balligen Seitenflächenabschnitte 138a, 138b, 138c, 138d aufweisen.

Zudem weist auch der Boden der Aufnahme 231 einen konkaven Abschnitt 231e zur Lagerung der balligen Stirnfläche 138e auf.

Wie die in Figur 5 im Querschnitt dargestellte Ausschnittsvergrößerung eines Teils des Verbindungsabschnitts zwischen angetriebener Welle 130 und Messerzapfen 230 verdeutlicht, ist die Aufnahme 231 in einem Kopf 232 des Messerzapfens 230 angeordnet ist und der Kopf 232 mit einem Spiel in der Vertiefung 137 gelagert, um die Pendelbewegung zu ermöglichen. Um zu verhindern, dass bei den entstehenden Pendelbewegungen Metall auf Metall reibt, können zudem Dämpfungselemente, beispielsweise aus Gummi, in Nuten 232a, 232b am Kopf 232 und/oder am Zapfen 138 vorgesehen sein.

Zusätzlich kann durch Dichtelemente, beispielsweise aus Gummi, der Bereich der Pendelbewegung noch abgedichtet werden.

Um zu verhindern, dass bei den entstehenden Pendelbewegungen zu hohe Verschleißerscheinungen zwischen den beteiligten Komponenten auftritt, können diese Komponenten oder deren betreffenden Oberflächen gehärtet bzw. vergütet werden.

### Bezugszeichenliste

- 1: Maschine
- 100: Maschinenrahmen
- 101: Zwischenboden
- 110: Gehäuse
- 111: Wellengehäuse
- 120: Motor
- 121: Riemenantrieb
- 122: Getriebe
- 130: Welle
- 131: Schnecke
- 131a: Abschnitt
- 131b: Abschnitt
- 137: Vertiefung
- 138: Zapfen
- 138a-d: balliger Seitenflächenabschnitt
- 138e: balliger Stirnflächenabschnitt
- 139: Ausnehmung
- 140: Wellenaufnahme
- 141: Fortsatz
- 150: Aufnahme
- 160: Kranausleger
- 161: Läufer
- 162: Winde
- 200: Schneidsatz
- 210: Schneidsatzgehäuse
- 220: Lochscheibe
- 221: Lochscheibe
- 230: Messerzapfen
- 231: Aufnahme
- 231a-d: konkaver Abschnitt
- 231e: konkaver Abschnitt
- 232: Kopf
- 232a: Nut
- 232b: Nut
- 235: Mittellinie
- 238: Messer
- 239: Messer
- 240: Vorschneider
- 241: Lager
- 250: Stützkreuz
- 251: Lager
- 300: Auffangbehälter
- 301: Schutzhaube

- F: Kraft

## Patentansprüche

1. Maschine (1) zur Verarbeitung von Fleisch mit einem Motor, (120) mit einer durch den Motor (120) angetriebenen Welle (130) und mit einer Aufnahme (150) für ein zu verarbeitendes Fleischstück oder einen zu verarbeitenden Fleischblock,
wobei die Aufnahme (150) zu der angetriebenen Welle (130) hin geöffnet ist, so dass ein Teil des in der Aufnahme (150) aufgenommenen Fleischstücks oder Fleischblocks durch eine zumindest abschnittsweise auf der angetriebenen Welle (130) angeordnete Schnecke (131) zu einem Schneidsatz (200) gefördert wird,
wobei der Schneidsatz (200) mindestens eine im Wesentlichen senkrecht zur Drehachse der angetriebenen Welle (130) angeordnete Lochscheibe(220, 221) und mindestens ein an einem Messerzapfen (230) angeordnetes und mit diesem in einer im Wesentlichen parallel zur mindestens einen Lochscheibe (220, 221) liegenden Ebene drehbares Messer (238, 239) aufweist,
wobei der Messerzapfen (230) derart an der angetriebenen Welle (130) angeordnet ist, dass eine Drehung der angetriebenen Welle (130) auf den Messerzapfen (230) übertragen wird, so dass sich das mindestens eine Messer (238, 239) dreht
**dadurch gekennzeichnet, dass** der Messerzapfen (230) an der angetriebenen Welle (130) pendelnd gelagert ist.

2. Maschine (1) nach Anspruch 1,
**dadurch gekennzeichnet, dass** die angetriebene Welle (130) einen Zapfen (138) mit zumindest abschnittsweise balligen Seitenflächen (138a, 138b, 138c, 138d) aufweist.

3. Maschine (1) nach Anspruch 2,
**dadurch gekennzeichnet, dass** der Zapfen (138) als im Wesentlichen vierkantförmiger, sechskantförmiger, achtkantförmiger oder mit sonstiger Polygonverbindung versehener, und auf der Drehachse der angetriebenen Welle (130) zentrierter Zapfen (138) ausgebildet ist.

4. Maschine (1) nach Anspruch 2 oder 3,
**dadurch gekennzeichnet, dass** der Messerzapfen (230) an seiner der angetriebenen Welle (130) zugewandten Stirnseite eine Aufnahme (231) für den Zapfen (138) mit zumindest abschnittsweise balligen Seitenflächen (138a, 138b, 138c, 138d) aufweist, wobei die Wände der Aufnahme (231) konkave Abschnitte (231a, 231b, 231c, 231d) zur Lagerung der balligen Abschnitte (138a, 138b, 138c, 138d) der Seitenflächen des Zapfens (138) aufweisen.

5. Maschine (1) nach einem der Ansprüche 2 bis 4,
**dadurch gekennzeichnet, dass** Zapfen (138) eine zumindest abschnittsweise ballige Stirnfläche (138e) aufweist.

6. Maschine (1) nach Anspruch 5,
und dass der Boden der Aufnahme (231) einen konkaven Abschnitt (321e) zur Lagerung des balligen Abschnitts der zumindest abschnittsweise balligen Stirnfläche (138e) aufweist.

7. Maschine (1) nach einem der Ansprüche 2 bis 6,
**dadurch gekennzeichnet, dass** der Zapfen (138) mit zumindest abschnittsweise balligen Seitenflächen (138a, 138b, 138c, 138d) am Boden einer Vertiefung (137) angeordnet ist, die sich ausgehend von der dem Messerzapfen (230) zugewandten Stirnseite der angetriebenen Welle (130) in die angetriebene Welle (130) hinein erstreckt, dass die Aufnahme (231) in einem Kopf (232) des Messerzapfens (230) angeordnet ist und dass der Kopf (232) des Messerzapfens (230) mit einem Spiel in der Vertiefung (137) gelagert ist.

8. Maschine (1) nach einem vorstehenden Anspruch,
**dadurch gekennzeichnet, dass** der Messerzapfen (230) vor und/oder hinter mindestens einer Lochscheibe (220, 221) gelagert ist.
